# EUROPÄISCHE PATENTSCHRIFT

(11) **EP 0 770 170 B1**
(45) Veröffentlichungstag und Bekanntmachung des Hinweises auf die Patenterteilung: **22.09.1999**
(21) Anmeldenummer: 95924844.4
(22) Anmeldetag: 07.07.1995
(51) Int. Cl.: F01K 13/02

(54) **VERFAHREN ZUR DIAGNOSE UND PROGNOSE DES BETRIEBSVERHALTENS EINER TURBINENANLAGE**
PROCESS FOR THE DIAGNOSIS AND PROGNOSIS OF THE OPERATING BEHAVIOUR OF A TURBINE PLANT
PROCEDE PERMETTANT D'ETABLIR DES DIAGNOSTICS ET DE FAIRE DES PREVISIONS SUR LA TENUE EN SERVICE D'UNE INSTALLATION DE TURBINES

(30) Priorität: 13.07.1994 DE 4424743
(43) Veröffentlichungstag der Anmeldung: 02.05.1997
(73) Patentinhaber: SIEMENS AKTIENGESELLSCHAFT, 80333 München (DE)
(72) Erfinder: GIRBIG, Paul, D-91080 Uttenreuth (DE)
(86) Internationale Anmeldenummer: DE9500892
(87) Internationale Veröffentlichungsnummer: WO9602737

(56) Entgegenhaltungen:
- DE-A- 3 421 522
- DE-A- 3 541 148
- US-A- 4 249 238
- PROCEEDINGS OF THE INSTITUTION OF ELECTRICAL ENGINEERS, Bd. 121, Nr. 6, Juni 1974 STEVENAGE GB, Seiten 491-499, R.HERNANDEZ AND L.FRERIS 'Micromachine simulation of steam power plant'
- IEEE TRANSACTIONS ON POWER SYSTEMS, Bd. 6, Nr. 2, Mai 1991 NEW YORK US, Seiten 753-761, XP 000220577 F. DE MELLO 'DYNAMIC MODELS FOR FOSSIL FUELED STEAM UNITS IN POWER SYSTEM STUDIES'

## Beschreibung

Die Erfindung bezieht sich auf ein Verfahren zur Diagnose und Prognose des Betriebsverhaltens einer Turbinenanlage, z.B. einer Dampf- oder Gasturbinenanlage.

Eine derartige Turbinenanlage wird unter vorgegebenen Randbedingungen oder Betriebsparametern betrieben, und es wird die Leistungsfähigkeit der Anlage meßtechnisch erfaßt. So werden beispielsweise Dampfturbinen zum Antrieb von Verdichtern oder Generatoren in Industrieanlagen installiert und bei wechselnden Betriebszuständen, d.h. mit unterschiedlichen Dampfmengen bei bestimmten Dampfzuständen (Dampfdruck und Dampftemperatur), betrieben. Treten beim Betrieb Abweichungen der aktuellen Betriebsparameter von den geplanten Betriebsdaten auf, so wird sich dies in den Meßwerten wiederspiegeln. Eine Vorrichtung zur Diagnose von Meßfehlern und zu deren Korrektur in einem Steuersystem einer Gasturbinenanlage ist aus der US-Patentschrift 4,249,238 bekannt.

Dabei erfolgt üblicherweise kein direkter Vergleich der aktuellen Betriebsparameter mit Meßdaten, die zu einem früheren Zeitpunkt ermittelt wurden. Ursache hierfür sind wechselnde Betriebsbedingungen, die es kaum erlauben, identische Betriebszustände zur Bestimmung der aktuellen Leistungsfähigkeit mehrfach anzufahren, ohne den Gesamtbetrieb der Anlage zu stören. Weichen zudem die Randbedingungen, d.h. einzelne Betriebsparameter, unter denen die Dampfturbine betrieben wird, von denen während der ersten Inbetriebnahme ab, so sind die Bewertungen über den Anlagenzustand, die ausschließlich auf den aktuellen Meßwerten beruhen, mit vielen Annahmen und großer Ungenauigkeit verbunden.

Der Erfindung liegt daher die Aufgabe zugrunde, ein Verfahren zur Diagnose und Prognose des Betriebsverhaltens einer derartigen Turbinenanlage anzugeben, mit dem das Verhalten der Turbinenanlage auch bei einer Abweichung einzelner Betriebsparameter oder Randbedingungen von geplanten Betriebsdaten wiedergegeben werden kann.

Diese Aufgabe wird erfindungsgemäß dadurch gelöst, daß bei Vorgabe eines Betriebsparameters mindestens ein weiterer Betriebsparameter mittels eines aus anlagenspezifischen Größen errechneten Anlagenmodells ermittelt wird.

Die Modulierung der Anlage basiert auf den Auslegungs- und Konstruktionsdaten, wie z.B. Geometrien und Materialien von Turbinenschaufeln und anderen Anlagenbauteilen des jeweiligen aus einer Turbine und einem Generator aufgebauten Turbosatzes. Alle erforderlichen Kenngrößen der Turbine, eines gegebenenfalls eingesetzten Getriebes und des Generators werden unter Berücksichtigung des Teillastverhaltens in die Berechnung integriert, die vorzugsweise mittels Software realisiert ist.

Bezüglich der Diagnose ermöglicht das Verfahren einen Vergleich der aktuellen Betriebsparameter mit berechneten Modelldaten der Turbinenanlage und zeigt somit Abweichungen der aktuellen Parameter von den erwarteten Betriebsdaten der Modellrechnung auf. Daher wird vorteilhafterweise zur Feststellung einer derartigen Abweichung ein aktuell gemessener Betriebszustand verglichen mit einem berechneten Soll-Wert, wobei zur Berechnung des Soll-Werts mindestens ein meßtechnisch erfaßter Betriebsparameter vorgegeben wird. Dieser aktuell gemessene Betriebszustand sowie der berechnete Soll-Wert werden zweckmäßigerweise simultan angezeigt.

Bezüglich der Prognose ermöglicht das Verfahren die Vorgabe gewünschter Randbedingungen oder Betriebsparameter, wobei die Reaktion der modellierten Turbinenanlage auf die gewünschten Randbedingungen berechnet werden. Dies ermöglicht vorteilhafterweise eine Einbindung der Turbinenanlage in eine Industrieanlage, z.B. eine Papierfabrik. Der vorgegebene Betriebsparameter kann somit ein manuell ausgewählter Wert oder ein Meßwert sein.

Das auf den anlagenspezifischen Kenngrößen oder Auslegungsdaten der Turbinenanlage basierende Anlagenmodell wird vorteilhafterweise durch einen einmaligen Rechenvorgang erstellt und als Rechenprogramm in einem Modellspeicher hinterlegt. Um diese Auslegungsdaten ändern oder austauschen zu können, ist vorteilhafterweise eine Auslegungsdatenbank zum Hinterlegen der anlagenspezifischen Kenngrößen vorgesehen.

Um dem Rechnerbaustein einerseits für eine Diagnose einzelne Meßwerte, und für eine Prognose die manuell vorgegebenen Betriebsparameter zuführen zu können, ist vorteilhafterweise ein Bedienbaustein vorgesehen. Über diesen Bedienbaustein werden aktuelle Meßwerte eingegeben oder ausgewählte Betriebsparameter vorgegeben.

Die mit der Erfindung erzielten Vorteile bestehen insbesondere darin, daß durch die Berechnung einzelner Betriebsparameter mittels des Anlagenmodells das Verhalten der Turbinenanlage bestimmt werden kann, auch wenn die vorgegebenen Randbedingungen oder Betriebsparameter, z.B. ein aktueller Dampfzustand, nicht mit denjenigen Betriebsdaten übereinstimmen, die bei der Auslegung der Turbinenanlage herangezogen wurden. Bei einer manuellen Vorgabe von Betriebsparametern ist eine Vorhersage der Reaktion der Turbinenanlage auf sich ändernde Betriebsparameter möglich, auch wenn die manuell vorgegebenen Betriebsparameter von den im On-line-Betrieb aktuellen Betriebsparametern abweichen. Aus einer Abweichung, die durch einen Vergleich des jeweils gemessenen und berechneten Betriebsparameter oder -zustands festgestellt werden kann, können Fehlerquellen diagnostiziert werden. So können aus einer derartigen Abweichung Rückschlüsse auf Fehler der Meßgerätetechnik oder auf Veränderungen der Dampfturbinenanlage gezogen werden, beispielsweise auf eine Belagbildung auf den Turbinenschaufeln.

Ein Ausführungsbeispiel der Erfindung wird anhand einer Zeichnung näher erläutert. Darin zeigen:
- Figur 1: ein Funktionsschema einer Diagnose- und Prognose-Vorrichtung für eine Dampfturbinenanlage, und
- Figur 2: ein Flußdiagramm zur Arbeitsweise eines Modellrechners der Vorrichtung gemäß Figur 1.

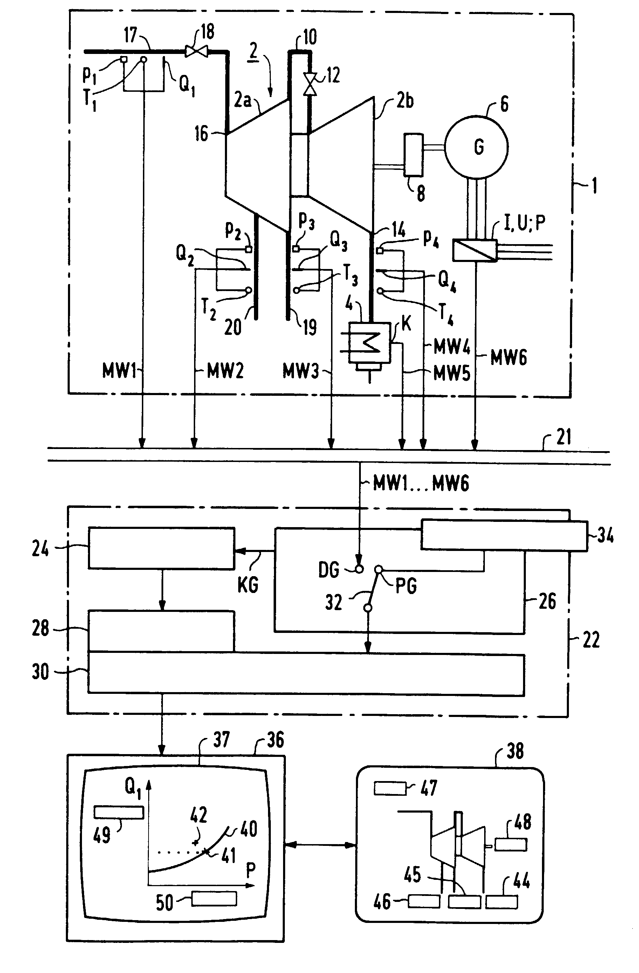

Die in Figur 1 schematisch dargestellte Dampfturbinenanlage 1 umfaßt eine mehrstufige Dampfturbine 2 und einen Kondensator 4 sowie einen Generator 6, der über ein Getriebe 8 von der Dampfturbine 2 angetrieben wird. Im Ausführungsbeispiel handelt es sich um eine Kondensationsturbine mit einem Hochdruckteil 2a und einem Niederdruckteil 2b. Der Niederdruckteil 2b ist eingangsseitig über eine Dampfleitung 10, in die ein Ventil 12 geschaltet ist, mit dem Hochdruckteil 2a verbunden. Er ist außerdem ausgangsseitig, das heißt auf der Abdampfseite, über eine Abdampfleitung 14 mit dem Kondensator 4 verbunden. In einen Einlaß 16 des Hochdruckteils 2a der Dampfturbine 2 mündet eine Frischdampfleitung 17, in die ein Ventil 18 geschaltet ist. Der Hochdruckteil 2a ist mit einer Entnahmeleitung 19 und mit einer Anzapfleitung 20 versehen, über die jeweils Dampf aus verschiedenen Stufen der Dampfturbine 2 entnommen werden kann.

Die Turbinenanlage 1 verfügt über Meßstellen pₙ, Tₙ, Qₙ, mit n = 1 bis 4, die die Randbedingungen oder Betriebsparameter, unter denen die Turbinenanlage 1 betrieben wird, als Meßwerte MW1 bis MW4 wiedergeben. So können als Betriebsparameter der Druck p, die Temperatur T und die Menge Q des Dampfes in den Dampfleitungen 14, 17, 19 und 20 gemessen werden.

Ebenso verfügt der Kondensator 4 über Meßstellen K, die die Betriebsparameter, unter denen der Kondensator 4 betrieben wird, als Meßwerte MW5 wiedergeben. Auch der Generator 6 verfügt zur Messung des Generatorstroms I und der Generatorspannung U über Meßstellen I, U, die den Betriebsparameter, unter dem der Generator 6 betrieben wird, d.h. die Generator- oder Klemmenleistung P, als Meßwert MW6 wiedergeben.

Die Meßwerte MW1 bis MW6 werden einer Datenleitung oder einem Datenbus 21 zugeführt. Der Datenbus 21 ist mit einer Vorrichtung 22 zur Datenverarbeitung verbunden. Die Vorrichtung 22 dient zur Diagnose des Betriebsverhaltens der Turbinenanlage, d.h. zur Bestimmung des Anlagenzustands im On-Line-Betrieb. Sie dient ebenso zur Prognose, d.h. zur vorausschauenden Ermittlung des Verhaltens der Turbinenanlage 1 unter vorgegebenen Betriebsparametern pₙ, Tₙ,Qₙ, und/oder P.

Um eine möglichst hohe Qualität der Vorausberechnung zu erreichen, ist eine zyklisch aktivierte Anpassung eines aus anlagenspezifischen Kenndaten oder Kenngrößen KG ermittelten Anlagenmodells an den tatsächlichen Betriebszustand der Dampfturbine 2 vorgesehen. Dazu sind in einer Auslegungsdatenbank 24 der Vorrichtung 22 die Kenngrößen KG der einzelnen Turbinendaten, wie z.B. Wellendurchmesser, Querschnitte, Spaltgrößen und Profile hinterlegt. Das heißt, alle bekannten mechanischen Konstruktionsdaten der Dampfturbine 2, des Kondensators 4, des Generators 6 und gegebenenfalls des Getriebes 8 sind dort als Kenngrößen KG gespeichert. Die Kenngrößen KG können über einen Bedienbaustein 26 jederzeit, z.B. bei Inbetriebnahme oder bei einer Nachrüstung der Turbinenanlage 1, eingegeben, ausgetauscht oder geändert werden.

Auf den Kenngrößen KG basierend wird durch einen einmaligen Rechenvorgang ein Modell der Anlagenkomponenten 2, 4 und 6 erstellt und als Rechenprogramm in einem Modellspeicher 28 hinterlegt. Der Modellspeicher 28 ist Teil einer Modellrechnung, die mittels eines Rechnerbausteins 30 durchgeführt wird. Insofern in der Turbinenanlage 1 das Getriebe 8 eingesetzt ist, wird dies in der Modellrechnung berücksichtigt.

Bei einer On-Line-Analyse, die auch für Teillastbereiche und unabhängig vom aktuellen Betriebszustand der Turbinenanlage 1 durchgeführt werden kann, wird zur Bestimmung des aktuellen Anlagenzustands über den Bedienbaustein 26 eine Diagnose DG und zur vorausschauenden Ermittlung des Verhaltens der Turbinenanlage 1 unter veränderten Randbedingungen eine Prognose PG angewählt. Dies ist in der Figur durch ein Schaltersymbol 32 angedeutet.

Wird mittels des Bedienbausteins 26 der Vorrichtung 22 die Diagnose DG angewählt, so werden die Meßwerte MW1 bis MW6 der im Rechnerbaustein 30 durchgeführten Modellrechnung zugeführt. Über einen Dateneingabebaustein 34 können Randbedingungen oder Betriebsparameter pₙ, Tₙ, Qₙ und/oder P unter denen das Verhalten der Turbinenanlage 1 prognostiziert werden soll, manuell vorgegeben werden. Wird mittels des Bedienbausteins 26 die Prognose PG angewählt, so wird diese manuelle Vorgabe der im Rechnerbaustein 30 durchgeführten Modellrechnung zugeführt.

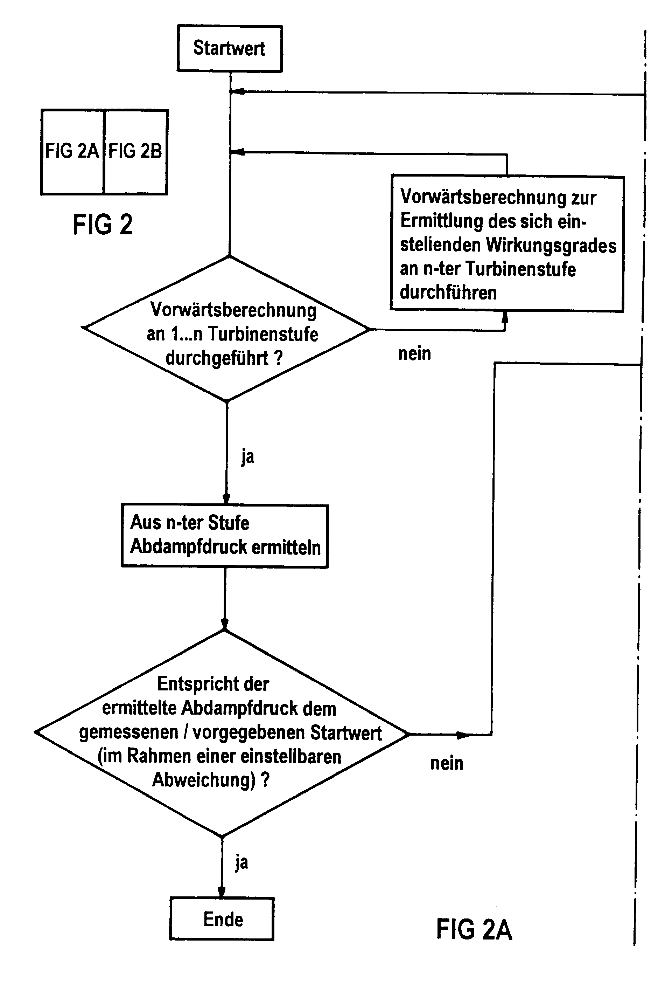

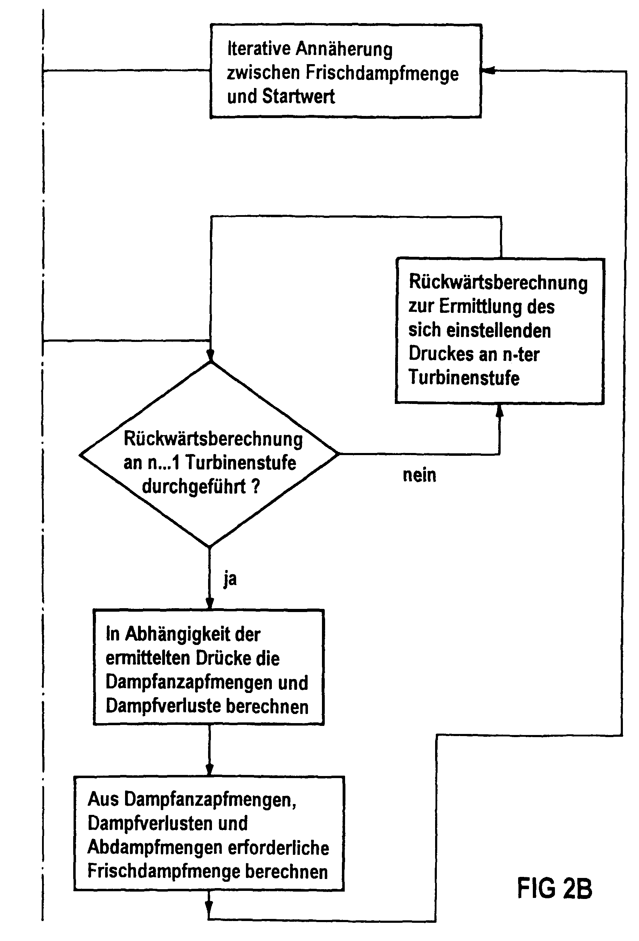

Im folgenden wird anhand des Flußdiagramms gemäß Figur 2 die Modellrechnung erläutert:

Der Rechnerbaustein oder Modellrechner 30 startet die Modellrechnung nach einem manuellen Bedienbefehl (Startwert). Zur Modellierung der Turbinenanlage 1 greift die Modellrechnung hierbei auf die in der Auslegungsdatenbank vorhandenen Kenngrößen KG zurück. Dabei werden alle erforderlichen Kenngrößen KG für die Dampfturbine 2, für den Generator 6 und im Falle einer Kondensationsturbine für den Kondensator 4 sowie für das gegebenenfalls eingesetzte Getriebe 8, insbesondere unter Berücksichtigung des Teillastverhaltens der Turbinenanlage 1, in die Modellrechnung integriert. So werden beispielsweise auch Leistungs- und Wirkungsgradkennlinien des Getriebes 8 und des Generators 6 im Turbinenmodell definiert und im Modellspeicher 28 hinterlegt. Die Modellrechnung ist zweckmäßigerweise durch ein Rechenprogramm, d.h. durch Software, realisiert.

Die in der Dampfturbine 2 an jeder Stufe erzeugten Leistungen werden in Abhängigkeit von den dort herrschenden Dampfzuständen, d.h. dem Dampfdruck p und der Dampftemperatur T, ermittelt. Hierbei gehen alle Dampfmengen Qₙ in der Frischdampfleitung 17, aus der Abdampfleitung 14, aus der Entnahmeleitung 19 und aus der Anzapfleitung 20 in die Modellrechnung ein. Mittels des Rechnerbausteins 30 werden die Druckverläufe in der Dampfturbine 2 berechnet und durch iterative Rechenvorgänge den Gegebenheiten der Turbinenanlage 1 angepaßt.

Die Modellrechnung ist so ausgelegt, daß auf sie auf verschiedenen Wegen zugegriffen werden kann. Hintergrund hierfür ist, daß das Turbinenmodell zur Bestimmung des Verhaltens der Dampfturbine 2, aber beispielsweise auch einer Gasturbine, unter verschiedenen Randbedingungen oder für verschiedene Betriebsparameter herangezogen wird. Um eine bestimmte Turbinenleistung oder Klemmenleistung P anhand der Modellrechnung vorauszuberechnen, können als Betriebsparameter beispielsweise die der Dampfturbine 2 zugeführte Dampfmenge Q₁ und die zugehörigen Dampf zustände, d.h. der Dampfdruck p₁ und/oder die Dampftemperatur T₁, definiert werden.

In einem anderen Fall kann als Betriebsparameter auch die Turbinenleistung oder Klemmenleistung P definiert sein und die Anforderung bestehen, mittels der Modellrechnung die von der Dampfturbine 2 benötigte Dampfmenge Q₁ zu berechnen. Durch Eingabe von Parametern für Toleranzen und Alterserscheinungen wird dabei eine Anpassung der Modellrechnung an den aktuellen Zustand der Turbinenanlage 1 vorgenommen, so daß bei einer vorausschauenden Rechnung auf diesen aktuellen Zustand der Turbinenanlage 1 zurückgegriffen werden kann.

Bei der Modellrechnung erfolgt zunächst eine Berechnung der Verluste in Abhängigkeit von den an den einzelnen Stufen der Dampfturbine 2 angesetzten Dampf zustände, wie Dampfdruck p und Dampftemperatur T. Unter Ausnutzung der Kenngrößen KG wird anschließend der theoretische thermische Wirkungsgrad an den einzelnen Stufen der Dampfturbine 2 berechnet. Die Berechnung des theoretischen thermischen Wirkungsgrads jeder Stufe erfolgt in Abhängigkeit von den an den einzelnen Stufen eingesetzten Dampf zuständen p, T. Unter dem theoretischen thermischen Wirkungsgrad wird das theoretisch mögliche Optimum der Wärmeausnutzung verstanden. Der theoretische thermische Wirkungsgrad wird reduziert um die berechneten Verluste und hieraus erfolgt die Ermittlung des effektiven Wirkungsgrades jeder Stufe in einer sogenannten Vorwärtsberechnung. Dabei wird in Richtung der Dampfströmung vom Turbineneinlaß 16 bis zur Abdampfseite an der Abdampfleitung 14 hin Stufe für Stufe der Wirkungsgrad berechnet. Der jeweils ermittelte effektive Wirkungsgrad einer Stufe (z.B. einer dritten Stufe) bestimmt die Dampf zustände p, T an der nachfolgenden Stufe (z.B. der vierten Stufe). Die ermittelten Dampfzustände p, T sind wiederum auschlaggebend für die Berechnung des Wirkungsgrades an dieser nachfolgenden Stufe (der vierten Stufe) und führen nach der Berechnung zu Dampf zuständen p, T, die die nachfolgende Stufe (z.B. die fünfte Stufe) wiederum beeinflussen u.s.w. Diese Berechnung des effektiven Wirkungsgrades erfolgt an allen Turbinenstufen in aufeinanderfolgender Reihenfolge vom Turbineneinlaß 16 bis zur Abdampfseite, d.h. bis zum Ausgang des Niederdruckteils 2b. Während der Vorwärtsberechnung werden alle Dampfmengen Qₙ aus der Frischdampfleitung 17, der Abdampfleitung 14, der Entnahmeleitung 19 und der Anzapfleitung 20 in Abhängigkeit von den dort jeweils herrschenden Dampf zuständen pₙ, Tₙ berücksichtigt. Aus den während der Wirkungsgradberechnung ermittelten Dampfzuständen pₙ, Tₙ ergeben sich bis zur Abdampfseite hin auf einen berechneten Gegendruck abfallende Dampfdrücke hinter den einzelnen Stufen der Dampfturbine 2.

Aufgrund der Anlagengegebenheiten kann die Dampfturbine 2 jedoch auch einen anlagenspezifisch definierten Abdampfdruck p₄ speisen, der von dem berechneten Abdampfdruck abweicht. Der anlagenspezifisch definierte Abdampfdruck p₄ kann z.B. auch bei der Prognose PG als Betriebsparameter manuell vorgegeben werden. Für den Fall einer Abweichung des anlagenspezifisch definierten oder gemessenen Abdampfdrucks p₄ von dem berechneten Abdampfdruck wird durch eine Rückwärtsberechnung rechnerisch durch eine Abfrage der Differenz bemerkt, daß die Vorwärtsberechnung auf einem abweichenden Druckverlauf in der Dampfturbine 2 aufgesetzt hat.

Bei der Rückwärtsberechnung wird der angestaute Druck oder Druckverlauf in der Dampfturbine 2 ausgehend von der Abdampfseite bis hin zum Dampfeinlaß 16 berechnet. Während der Rückwärtsberechnung werden die Dampfmenge Q₁ in der Frischdampfleitung 17 und die Dampfmengen Q₂, Q₃, Q₄ in der Anzapfleitung 20, in der Entnahmeleitung 19 bzw. in der Abdampfleitung 14 in Abhängigkeit von den dort jeweils herrschenden Dampfdrücken p₁, p₂, p₃ bzw. p₄ und Dampftemperaturen T₁, T₂, T₃ bzw. T₄ neu bestimmt. Dabei werden auch an Dichtungsscheiben der Dampfturbine 2 austretende Dampfmengen aus einem Vergleich zwischen der in die Dampfturbine 2 eintretenden Dampfmenge Q₁ und den aus der Dampfturbine 2 entnommenen Dampfmengen Q₂, Q₃ und Q₄ ermittelt. Sind die Dampfmengen Qₙ in den Leitungen 14, 17, 19 und 20 neu bestimmt worden, wird erneut eine Vorwärtsberechnung gestartet. Das wechselweise Durchführen von Vorwärtsberechnung und Rückwärtsberechnung erfolgt so lange, bis eine bestimmbar kleine Abweichung zwischen dem berechneten und dem gemessenen Abdampfdruck p₄ festgestellt wird. Danach erfolgt ein gesteuertes Abbrechen des iterativen Rechenvorgangs. Das Iterationsverfahren kann auch bei einer einstellbaren maximalen Abweichung automatisch beendet werden.

Aus den berechneten Dampfmengen Qₙ und den berechneten effektiven Wirkungsgraden je Stufe der Dampfturbine 2 sowie unter Berücksichtigung eventueller Verluste, z.B. an einem Turbinenregelventil, wird aus der Summe der einzelnen Stufenleistungen die Turbinenleistung und damit die Klemmenleistung P errechnet. Soll dagegen bei vorgegebener Turbinenleistung oder Klemmenleistung P die erforderliche Dampfmenge Q₁ am Turbineneinlaß 16 berechnet werden, so wird ein Iterationsverfahren die Vorwärtsberechnung und Rückwärtsberechnung wie oben beschrieben wechselweise durchführen, bis die vorgegebene Gesamtturbinenleistung erreicht wird.

Ist die Modellrechnung abgeschlossen, so werden die Rechenergebnisse auf einem Bildschirmsystem 36 angezeigt. Über das Bildschirmsystem 36 sind die aktuellen Meßwerte MW1 bis MW6 und die im Fall der Prognose PG vorgegebenen Betriebsparameter p, T, Q und/oder P sowie die entsprechenden berechneten Betriebsparameter abrufbar. Dabei werden vorzugsweise zwei Diagramme 37 und 38 zur Verfügung gestellt.

Das Diagramm 37 ist ein Verbrauchs-Diagramm, in dem bei einer Dampfturbinenanlage 1 eine Dampfverbrauchskurve 40 mit einem mittels der Modellrechnung bestimmten Betriebspunkt 41 und ein aus den Meßwerten MW1 bis MW6 ermittelter Betriebspunkt 42 dargestellt werden.

Das Diagramm 38 ist ein Anlagenfließbild mit symbolischer Darstellung der Dampfturbine 2 sowie Örtlicher Zuordnung der Meßstellen pₙ, Tₙ, Qₙ (n = 1, 2, 3, 4) und Anzeigefeldern 44 bis 48. Im Anzeigefeld 44 werden Abdampf-Parameter, im Anzeigefeld 45 Entnahme-Parameter, im Anzeigefeld 46 Anzapf-Parameter und im Anzeigefeld 47 Frischdampf-Parameter angezeigt. Im Anzeigefeld 48 wird die Klemmenleistung P am Generator 6 angezeigt. Jedes Anzeigefeld 44 bis 48 ist zur Anzeige des vorgegebenen, des entsprechenden berechneten und des gemeinsamen Betriebsparameters pₙ, Tₙ, Qₙ, P unterteilt.

Anhand der beiden Diagramme 37 und 38 ist im Diagnosefall ein Vergleich der Turbinenanlage 1 mit der Modellrechnung zur Bestimmung von Abweichungen möglich. Im Prognosefall werden bei Vorgabe eines Betriebsparameters pₙ, Tₙ, Qₙ oder P der im entsprechenden Anzeigefeld 44 bis 48 angezeigt wird, die mittels des aus den anlagenspezifischen Kenngrößen KG ermittelten Anlagenmodells berechneten weiteren Betriebsparameter pₙ, Tₙ, Qₙ bzw. P in den entsprechenden Anzeigefeldern 44 bis 48 angezeigt, so daß die Reaktion der Turbinenanlage 1 ersichtlich wird.

Wird beispielsweise die Klemmenleistung P am Generator 6 vorgegeben, so werden alle anderen Betriebsparameter pₙ, Tₙ, Qₙ der Turbinenanlage 1 mittels des Modellrechners 30 durch das Turbinenmodell berechnet. In dem Diagramm 38 werden dann im Anzeigefeld 48 die gemessene Klemmenleistung P, der vorgegebene Betriebsparameter für die Klemmenleistung und der berechnete Wert für die Klemmenleistung angezeigt. Entsprechend werden die gemessenen und die berechneten Betriebsparameter für Dampfdruck pₙ, Dampftemperatur Tₙ und Dampfmenge Qₙ örtlich zugeordnet in den entsprechenden Anzeigefeldern 44 bis 47 angezeigt. Außerdem werden bei Anwahl des Diagramms 37, auf dessen Abszisse die Klemmenleistung P und auf dessen Ordinate die Frischdampfmenge Q₁ aufgetragen ist, der berechnete Betriebspunkt 41 innerhalb der Dampfverbrauchskurve 40 und der gemessene Betriebspunkt 42 dargestellt. Die gemessene und berechnete Frischdampfmenge Q₁ sowie die gemessene und berechnete Klemmenleistung P werden außerdem auf Anzeigefeldern 49 bzw. 50 angezeigt. Zeigen sich, wie im Ausführungsbeispiel, Unterschiede zwischen gemessenen und berechneten Betriebsparametern, so können Fehler in der Meßgerätetechnik oder Veränderungen der Dampfturbinenanlage 1 Ursache hierfür sein. Ein Parametervergleich anhand des Diagramms 38 gibt Aufschluß darüber, ob eine Veränderung der Meßgerätetechnik oder beispielsweise der Dampfturbine 2 vorliegt. So können z.B. die gemessenen Betriebsparameter auf eine Belagbildung an den Schaufeln der Turbine hinweisen. Ein direkter Vergleich zwischen der gemessenen und der berechneten Turbinenleistung oder Klemmenleistung P verdeutlicht die entstandene Leistungsdifferenz oder geringere Energieerzeugung. Derartige Informationen helfen dem Betreiber der Dampfturbinenanlage 1 zum Beispiel bei der Bestimmung des richtigen Zeitpunkts für eine Revision.

Werden dagegen produktionsbedingte Änderungen der Betriebsparameter pₙ, Tₙ oder Qₙ an der Dampfturbine 2 erwogen, so ist es für den Betreiber interessant, die Auswirkungen auf die Dampfturbine 2 zu kennen. Vom Betreiber können nun über den Bedienbaustein 26 neue Betriebsparameter pₙ, Tₙ oder Qₙ vorgegeben werden. Die örtliche Zuordnung und die zulässigen Betriebsbereiche der jeweiligen Betriebsparameter werden in dem Diagramm 38 angezeigt. Wird die Modellrechnung nach Vorgabe der gewünschten Betriebsparameter gestartet, erfolgt innerhalb kurzer Zeit, d.h. im Bereich von Sekunden, eine Visualisierung der berechneten Betriebsparameter sowie eine Darstellung des vorausberechneten Betriebspunkts 41 innerhalb des Diagramms 37. Produktionsbedingte Änderungen der Betriebsparameter sowie deren Auswirkungen auf die Dampfturbine 2 werden somit im vorhinein kalkulierbar. Erlauben dabei Betriebsparameter pₙ, Tₙ, Qₙ und/oder P noch Freiräume, so kann das Teillastverhalten der Turbinenanlage 1 unter variablen Betriebsparametern auch in ein regelungstechnisches Konzept eingehen.

Die beschriebene Diagnose- und Prognose-Vorrichtung 22 kann in vorteilhafter Weise auch in eine bereits bestehende Leittechnik der Dampfturbinenanlage 1 eingebunden werden.

## Patentansprüche

1. Verfahren zur Diagnose und Prognose des Betriebsverhaltens einer Turbinenanlage (1),
**dadurch gekennzeichnet,**
- daß aus anlagenspezifischen Kenngrößen (KG) ein Anlagenmodell ermittelt wird,
- daß dem Anlagenmodell ein Betriebsparameter (pₙ, Tₙ, Qₙ, P) vorgegeben wird, und
- daß mittels des Anlagenmodells mindestens ein weiterer Betriebsparameter (pₙ, Tₙ, Qₙ, P) ermittelt wird.

2. Verfahren nach Anspruch 1,
**dadurch gekennzeichnet**, daß zur Feststellung einer Abweichung ein aktuell gemessener Betriebszustand (42) verglichen wird mit einem berechneten Soll-Wert (41), wobei zur Berechnung des Soll-Werts (41) mindestens ein meßtechnisch erfaßter Betriebsparameter (pₙ, Tₙ, Qₙ, P) vorgegeben wird.

3. Verfahren nach Anspruch 2,
**dadurch gekennzeichnet**, daß der aktuell gemessene Betriebszustand (42) und der berechnete Soll-Wert (41) simultan dargestellt werden.

4. Verfahren nach Anspruch 1,
**dadurch gekennzeichnet**, daß zur Vorausberechnung des Verhaltens der Turbinenanlage (1) mindestens ein Betriebsparameter (pₙ, Tₙ, Qₙ, P) manuell vorgegeben wird.

5. Verfahren nach Anspruch 4,
**dadurch gekennzeichnet**, daß der oder jeder vorausberechnete Betriebsparameter (pₙ, Tₙ, Qₙ, P) und jeder entsprechende, meßtechnisch erfaßte Betriebsparameter (pₙ, Tₙ, Qₙ, P) simultan angezeigt werden.

## Claims

1. Method for diagnosing and predicting the operational performance of a turbine plant (1),
characterized in that
- a plant model is determined from plant-specific characteristics (KG),
- an operating parameter (pₙ, Tₙ, Qₙ, P) is prescribed for the plant model, and
- at least one further operating parameter (pₙ, Tₙ, Qₙ, P) is determined by means of the plant model.

2. Method according to Claim 1, characterized in that in order to establish a deviation a current measured operating state (42) is compared with a calculated desired value (41), at least one metrologically determined operating parameter (pₙ, Tₙ, Qₙ, P) being prescribed for the purpose of calculating the desired value (41).

3. Method according to Claim 2, characterized in that the currently measured operating state (42) and the calculated desired value (41) are represented simultaneously.

4. Method according to Claim 1, characterized in that at least one operating parameter (pₙ, Tₙ, Qₙ, P) is manually prescribed for the purpose of precalculating the performance of the turbine plant (1).

5. Method according to Claim 4, characterized in that the or each precalculated operating parameter (pₙ, Tₙ, Qₙ, P) and each corresponding, metrologically determined operating parameter (pₙ, Tₙ, Qₙ, P) are displayed simultaneously.

## Revendications

1. Procédé destiné à établir des diagnostics et à faire des prévisions quant au comportement en fonctionnement d'une installation à turbine (1),
**caractérisé**
- en ce que l'on détermine un modèle d'installation à partir de grandeurs caractéristiques (KG) spécifiques à l'installation,
- en ce que l'on prescrit au modèle d'installation un paramètre de fonctionnement (pₙ, Tₙ, Qₙ, P), et
- en ce que l'on détermine au moins un autre paramètre de fonctionnement (pₙ, Tₙ, Qₙ, P) au moyen du modèle d'installation.

2. Procédé selon la revendication 1, **caractérisé** en ce que pour déceler un écart, on compare un état de fonctionnement actuel (42) mesuré, à une valeur de consigne (41) calculée, au moins un paramètre de fonctionnement (pₙ, Tₙ, Qₙ, P) relevé par une technique de mesure étant prescrit pour le calcul de la valeur de consigne (41).

3. Procédé selon la revendication 2, **caractérisé** en ce que l'état de fonctionnement actuel (42) mesuré et la valeur de consigne (41) calculée, sont représentés simultanément.

4. Procédé selon la revendication 1, **caractérisé** en ce que pour le calcul prévisionnel du comportement de l'installation à turbine (1), on prescrit manuellement au moins un paramètre de fonctionnement (pₙ, Tₙ, Qₙ, P).

5. Procédé selon la revendication 4, **caractérisé** en ce que le ou chaque paramètre de fonctionnement (pₙ, Tₙ, Qₙ, P) calculé en prévision et chaque paramètre de fonctionnement (pₙ, Tₙ, Qₙ, P) correspondant relevé par une technique de mesure, sont visualisés simultanément.
